# EUROPÄISCHE PATENTANMELDUNG

(11) **EP 0 619 351 A1**
(43) Veröffentlichungstag der Anmeldung: **12.10.1994**
(21) Anmeldenummer: 94810185.2
(22) Anmeldetag: 24.03.1994
(51) Int. Cl.: C09J 5/06, F16B 11/00

(54) **Verfahren zum Verbinden von Komponenten aus Metall**

(30) Priorität: 06.04.1993 CH 1053/93
(71) Anmelder: ALUSUISSE-LONZA SERVICES AG, CH-8034 Zürich (CH)
(72) Erfinder: Timm, Jürgen, D-78256 Steisslingen (DE); Furrer, Peter, CH-8422 Pfungen (CH)

(57) **Zusammenfassung**

Bei einem Verfahren zum Verbinden von Komponenten aus Metall, insbesondere aus Aluminium und Aluminiumlegierungen, wird zwischen Passflächen der zu verbindenden Komponenten ein wärmeaushärtbarer Klebstoff aufgebracht und zur Aushär- tung des Klebstoffs eine der Passfläche benachbarte äussere Fläche einer Komponente mit Infrarot bestrahlt. Hierbei ist zumindest die zur Bestrahlung vorgesehene äussere Fläche der Komponente mit einem Rauheitsmuster versehen.

Durch die Verminderung der Reflektivität der aufgerauhten Oberfläche wird das Absorptionsvermögen für die Infrarot-Strahlung erhöht. Eine bevorzugte Anwendung des Verfahrens wird beim Verkleben von Formteilen, insbesondere von Karosserieblechen im Automobilbau, gesehen.

## Beschreibung

Die Erfindung betrifft ein Verfahren zum Verbinden von Komponenten aus Metall, insbesondere aus Aluminium und Aluminiumlegierungen, mittels eines zwischen Passflächen der zu verbindenden Komponenten aufgebrachten, wärmeaushärtbaren Klebstoffs, wobei zur Aushärtung des Klebstoffs eine der Passfläche benachbarte äussere Fläche einer Komponente mit Infrarot bestrahlt wird.

In der Verbindungstechnik metallischer Komponenten gewinnt das Kleben zunehmend an Bedeutung. So sind auch im Automobilbau Bestrebungen im Gange, anstelle von Punktschweissverbindungen oder zusätzlich zu diesen vermehrt Klebverbindungen einzusetzen. Als Beispiel sei hier die Verbindung zwischen Aussen- und Innenblech von Karosserieverkleidungen erwähnt. Die bei Karosserieteilen an die Verbindungsstellen bezüglich Festigkeit gestellten Anforderungen können heute zuverlässig nur mit wärmeaushärtbaren Klebstoffen erreicht werden. In der Praxis stellt sich somit das Problem, auf welche Weise die Wärme zur Aushärtung des Klebstoffs optimal zugeführt werden kann. Hierzu bieten sich die folgenden Möglichkeiten an:
- Die gesamte Struktur kann in einen Ofen gestellt werden, wobei für grosse Teile ein entsprechend grosser Ofen zur Verfügung stehen muss. Ein Nachteil dieses Verfahrens besteht darin, dass die ganze Struktur aufgeheizt werden muss und durch die Wärme andere Teile beschädigt werden können, wie etwa eine elektrische Verdrahtung oder thermoplastische Armaturen.
- Die den aushärtbaren Klebstoff aufweisende Stelle wird mit heisser Luft behandelt. Bei dieser Methode stellt sich insbesondere bei gut wärmeleitenden Metallen, beispielsweise bei Komponenten aus Aluminium oder Aluminiumlegierungen, das Problem eines schnellen Wärmeverlustes durch Wärmeleitung, sodass während des Aushärtevorgangs zur Aufrechterhaltung einer örtlich hohen Temperatur eine entsprechend hohe Wärmezufuhr erforderlich ist.
- Durch direkten Kontakt mit flexiblen Wärmekissen und - bandagen kann zwar eine örtlich begrenzte hohe Wärmezufuhr erreicht werden. Diese Technik erfordert allerdings eine gute Kontaktstelle und damit eine sorgfältige Befestigung der Heizelemente, was eine allseitige Zugänglichkeit der Verbindungsstelle erfordert.
- Durch Infrarot-Wärmestrahlung kann die zur Kompensation des Wärmeverlustes durch Wärmestrahlung bei Metallen, insbesondere Aluminium und Aluminiumlegierungen, erforderliche örtlich hohe Wärmezufuhr ohne weiteres aufrecht erhalten werden. Die hohe Reflektivität metallischer Oberflächen vermindert jedoch einerseits die Wärmeabsorption durch das Metall und kann andererseits zur Ueberhitzung der Infrarot-Lampen sowie zum Schmelzen gelöteter Verbindungen führen.

Zur Behebung der erwähnten Nachteile der Aushärtungsbehandlung mittels Infrarot-Wärmestrahlung ist es aus der EP-B-0 311 323 bekannt, die zu bestrahlende, in der Nähe der Passfläche liegende äussere Fläche einer der zu verbindenden Komponenten mit einer Infrarot absorbierenden Beschichtung zu versehen. Die Beschichtung besteht üblicherweise aus einem schwarzen Lack aus Acrylharz und wird vor der Bestrahlung auf jeweils nur einen Teil der äusseren Oberfläche der zu verbindenden Kompenenten aufgebracht. Nach erfolgter Aushärtung der Klebeverbindung muss der schwarze Lack mit einem Lösungsmittel wieder entfernt werden.

Angesichts dieser Gegebenheiten haben sich die Erfinder die Aufgabe gestellt, ein Verfahren der eingangs erwähnten Art zu schaffen, welches ohne zusätzliche Beschichtung die Anwendung von Infrarot-Wärmestrahlung zur Aushärtung der Klebverbindung ermöglicht. Das Verfahren soll insbesondere zur einfachen und rationellen Verklebung von Karosserieblechen geeignet sein.

Zur erfindungsgemässen Lösung der Aufgabe führt, dass zumindest die zur Bestrahlung vorgesehene äussere Fläche der Komponente mit einem Rauheitsmuster versehen ist. Bevorzugt ist das Rauheitsmuster isotrop.

Mit der Aufrauhung der Metalloberfläche vermindert sich deren Reflexionsgrad und das Absorptionsverhalten wird verbessert. Das erfindungsgemässe Verfahren eignet sich in besonderem Masse für geklebte Strukturen, bei denen zumindest eine der Komponenten ein Blech ist.

Die Texturierung der Oberfläche mit einem Rauheitsmuster erfolgt in zweckmässiger Weise über ein entsprechendes, auf die Oberfläche von Arbeitswalzen aufgebrachtes Rauheitsmuster, welches in einem Prägevorgang mit schwacher Stichabnahme auf die Oberfläche der Komponenten übertragen wird. Wie bei jedem Prägevorgang sind die Oberflächentopographien der Arbeitswalze und der damit geprägten Komponentenoberflächen zueinander komplementär, d.h. Spitzen bzw. Erhebungen auf der Walzenoberfläche werden zu Tälern bzw. Vertiefungen in der Komponentenoberfläche und umgekehrt.

Beim Aufrauhen der Oberfläche von Blechen aus Aluminium oder Aluminiumlegierungen erfolgt das Uebertragen des Rauheitsmusters von den Arbeitswalzen auf das Blech bevorzugt beim letzten Kaltwalzstich als Prägeschritt mit einer Stichabnahme von 3 bis 5%.

Zur Durchführung des erfindungsgemässen Verfahrens geeignete Rauheitsmuster ergeben sich durch Prägen einer Oberflächentextur mit Arbeitswalzen, deren Oberfläche nach den im folgenden beschriebenen Verfahren aufgerauht sind.
1. Funkenerodierverfahren (EDT-Electrical Discharge Texturing). Beim EDT-Verfahren wird die Walze längs einer Reihe von Elektroden bei gleichzeitiger axialer Oszillation gedreht und dabei die Oberfläche auf eine vorgewählte Rauhtiefe texturiert. Durch die Entladung elektrischer Energie zwischen der Walzenoberfläche und den über eine dielektrische Flüssigkeit getrennten Elektroden werden auf der Walzenoberfläche kleine Krater gebildet. Die Rauheit der Walze kann auf bekannte Weise durch eine Reihe von Maschinen-Parametern eingestellt werden. Das Rauheitsmuster ist eine statistische Verteilung von Spitzen und Tälern. Das EDT-Verfahren ermöglicht die Einstellung von Mittenrauhwerten Rₐ zwischen 1 und 6 µm. Mittenrauhwert und Spitzenzahl sind mitander weitgehend verknüpft. Für das erfindungsgemässe Verfahren besonders geeignet ist eine Oberflächentextur mit niedriger Rauheit und hoher Spitzenzahl.
2. Schleuderradverfahren (SBT-Shot Blast Texturing). Beim SBT-Verfahren wird das kantige Strahlmittel dem Schleuderrad zugeführt und von dort aus auf die Walze geschleudert. Beim Auftreffen auf die Walzenoberfläche geben die einzelnen Strahlkörner ihre kinetische Energie ab und verformen dabei die Oberfläche der Walze plastisch. Die Walzenrauheit kann durch die Wahl der Strahlmittelkorngrösse, die Drehzahl des Schleuderrades sowie durch andere Maschinen-Parameter geregelt werden. Erzielbar sind Mittenrauhwerte Rₐ zwischen 1,5 und 6 µm. Das Rauheitsmuster entspricht auch hier einer statistischen Verteilung von Spitzen und Tälern.
3. Lasertexverfahren. Bei diesem Verfahren wird ein Laserstrahl durch eine Linse auf die Walzenoberfläche fokussiert und durch ein Chopperrad unterbrochen. Dabei dreht sich die Walze und wird axial verschoben. Auf der Walzenoberfläche wird im Brennpunkt des Laserstrahls das Walzenmaterial lokal aufgeschmolzen. Die Einstellung der gewünschten Rauhigkeit erfolgt über die Drehzahl der Walze, die Laserleistung sowie die Brennpunktlage des Laserstrahls. Die Rauheitsstruktur gleicht einer gleichmässigen Verteilung von Kratern auf der Walzenoberfläche.
4. Elektonenstrahlverfahren (EBG-Electron Beam Graving). Beim EBG-Verfahren wird eine rotierende Walze unter Vakuum axial an einer ortsfesten Elektronenstrahlkanone vorbeigeführt. Die hochenergetischen Elektronen geben beim Auftreffen auf die Walze ihre kinetische Energie in Form von Wärme ab. Bei genügend hoher Temperatur wird dann das vom Strahl getroffene Volumen aufgeschmolzen und teilweise verdampft. Das auf der Walze erscheinende Rauheitsmuster ist vergleichbar mit demjenigen nach dem Lasertexverfahren. Die Kratertiefe ist beliebig einstellbar und hängt von der Schussdauer ab. Die Kraterdurchmesser hängen von der Fokussierung des Elektronenstrahls ab.
5. Isomill-Verfahren. Beim Isomill-Verfahren sind in die Oberflächen der Arbeitswalzen in Umfangrichtung und quer dazu in Achsenrichtung zur Erzeugung eines im wesentlichen quadratischen Rauheitsmusters Rillen eingraviert.

Insbesondere zum Aufrauhen von Aluminium und Aluminiumlegierungen zur Durchführung des erfindungsgemässen Verfahrens hat sich zum Aufrauhen der Oberfläche der Arbeitswalzen das EDT-Verfahren als besonders geeignet erwiesen. Glanzmessungen nach DIN 67530 an Blechproben aus Aluminium mit der Standardoberfläche "Millfinish" und einer Oberfläche, die mit einer nach dem EDT-Verfahren aufgerauhten Arbeitswalze texturiert worden ist, zeigen deutlich die gegenüber einer Standardoberfläche stark verminderte Reflexion der EDT-Oberfläche:

| Messrichtung | Reflexionswert (85° Einstrahl- und Beobachtungswinkel) | |
|---|---|---|
| | MILLFINISH | EDT |
| parallel zur Walzrichtung | 75% | 18% |
| quer zur Walzrichtung | 23% | 18% |

Zur Erzeugung der Standardoberfläche "Millfinish" werden in die Arbeitswalzen über deren Umfang feine Rillen eingraviert. Zweckmässigerweise wird bei der Texturierung der Oberfläche von Aluminiumblechen zunächst eine Millfinish-Standardoberfläche erzeugt und das gewünschte Rauheitsmuster anschliessend in einem letzten Prägestich auf die Standardoberfläche aufgebracht.

Ein besonderer Vorteil des erfindungsgemässen Verfahrens wird bei dessen Anwendung zum Verkleben von Formteilen, insbesondere von Karosserieblechen im Automobilbau, gesehen. Neben der erfindungsgemässen Verminderung der Reflexion der Blechoberfläche und der damit verbundenden stärkeren Absorption der IR-Stahlung wird durch das isotrope Rauheitsmuster gleichzeitig das Verformungsverhalten des Blechs verbessert.

Der Vollständigkeit halber sei hier noch erwähnt, dass das erfindungsgemässe Verfahren nicht an die Verwendung eines bestimmten Klebstoffs gebunden ist. Vielmehr eignet sich jeder wärmeaushärtbare Ein- oder Mehrkomponentenklebstoff wie z.B. Epoxy-, Phenol- oder Acrylklebstoff.

Ebenso können die zu verbindenden Komponenten, insbesondere Bleche, ein- oder beidseitig aufgerauht und ggf. mit einem Lackhaftgrund oder Korrosionsschutz wie beispielsweise einer anodischen Oxidschicht oder einer Chromat/Phosphat-Konversionsschicht versehen sein.

## Patentansprüche

1. Verfahren zum Verbinden von Komponenten aus Metall, insbesondere aus Aluminium und Aluminiumlegierungen, mittels eines zwischen Passflächen der zu verbindenden Komponenten aufgebrachten, wärmeaushärtbaren Klebstoffs, wobei zur Aushärtung des Klebstoffs eine der Passfläche benachbarte äussere Fläche einer Komponente mit Infrarot bestrahlt wird,
dadurch gekennzeichnet,
dass zumindest die zur Bestrahlung vorgesehene äussere Fläche der Komponente mit einem Rauheitsmuster versehen ist.

2. Verfahren nach Anspruch 1, dadurch gekennzeichnet, dass das Rauheitsmuster isotrop ist.

3. Verfahren nach Anspruch 1 oder 2, dadurch gekennzeichnet, dass zumindest eine der Komponenten ein Blech ist.

4. Verfahren nach einem der Ansprüche 1 bis 3, dadurch gekennzeichnet, dass das Rauheitsmuster über ein entsprechendes, auf die Oberfläche von Arbeitswalzen aufgebrachtes Rauheitsmuster auf die Oberfläche der Komponenten übertragen wird.

5. Verfahren nach Anspruch 4, dadurch gekennzeichnet, dass beim Aufrauhen der Oberfläche von Blechen aus Aluminium und Aluminiumlegierungen das Uebertragen des Rauheitsmusters von den Arbeitswalzen auf das Blech beim letzten Kaltwalzstich als Prägeschritt mit einer Stichabnahme von 3 bis 5% erfolgt.

6. Verfahren nach Anspruch 4 oder 5, dadurch gekennzeichnet, dass die Oberfläche der Arbeitswalzen nach dem Funkenerodierverfahren (EDT-Electrical Discharge Texturing) aufgerauht sind.

7. Verfahren nach Anspruch 4 oder 5, dadurch gekennzeichnet, dass die Oberfläche der Arbeitswalzen nach dem Schleuderradverfahren (SBT-Shot Blast Texturing) aufgerauht sind.

8. Verfahren nach Anspruch 4 oder 5, dadurch gekennzeichnet, dass die Oberfläche der Arbeitswalzen nach dem Lasertexverfahren aufgerauht sind.

9. Verfahren nach Anspruch 4 oder 5, dadurch gekennzeichnet, dass die Oberfläche der Arbeitswalzen nach dem Elektronenstrahlverfahren (EBG-Electron Beam Graving) aufgerauht sind.

10. Verfahren nach Anspruch 4 oder 5, dadurch gekennzeichnet, dass in die Oberflächen der Arbeitswalzen in Umfangrichtung und quer dazu in Achsenrichtung zur Erzeugung eines im wesentlichen quadratischen Rauheitsmuster (Isomill) Rillen eingraviert sind.

11. Verfahren nach einem der Ansprüche 4 bis 10, dadurch gekennzeichnet, dass das Rauheitsmuster auf ein Blech mit einer Millfinish-Standardoberfläche aufgebracht ist.

12. Anwendung des Verfahrens nach einem der Ansprüche 1 bis 11 beim Verkleben von Formteilen, insbesondere von Karosserieblechen im Automobilbau.

13. Blech, insbesondere Karosserieblech für den Automobilbau, mit einem über nach dem EDT-, SBT-, Lasertex-, EBG- oder Isomill-Verfahren aufgerauhte Arbeitswalzen aufgebrachten Rauheitsmuster zur Durchführung des Verfahrens nach einem der Ansprüche 1 bis 11.
